(19) Europäisches Patentamt
European Patent Office
Office européen des brevets

(11) Publication number: **0 065 869**
**B1**

# (12) EUROPEAN PATENT SPECIFICATION

(45) Date of publication of patent specification: **25.07.84**

(51) Int. Cl.$^3$: **C 09 K 3/34,** G 02 F 1/133 //C09B29/00

(21) Application number: **82302543.2**

(22) Date of filing: **19.05.82**

## (54) Liquid crystalline materials incorporating dichroic dye and optical displays utilizing same.

(30) Priority: **21.05.81 US 265769**

(43) Date of publication of application:
**01.12.82 Bulletin 82/48**

(45) Publication of the grant of the patent:
**25.07.84 Bulletin 84/30**

(84) Designated Contracting States:
**CH DE FR GB IT LI**

(56) References cited:
**None**

(73) Proprietor: **Crystaloid Electronics Company**
**5282 Hudson Drive P.O. Box 628**
**Hudson Ohio 44236 (US)**

(72) Inventor: **Ferrato, Joseph Patrick**
**2935 Millboro Road**
**Stow Ohio 44224 (US)**

(74) Representative: **Spall, Christopher John et al,**
**BARKER, BRETTELL & DUNCAN 138 Hagley Road**
**Edgbaston Birmingham B16 9PW (GB)**

**EP 0 065 869 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

INTRODUCTION

This invention relates generally to nematic liquid crystalline compositions incorporating a dichroic(pleochroic) dye for improving color contrast between electrically activated and de-activated states of the nematic liquid crystalline material and more particularly to nematic liquid crystalline compositions incorporating a new family of optically active azo type dichroic dyes that are imparted with both dichroic and liquid crystalline characteristics and that singularly and in combination with other members of the family and with other conventional dyes are able to provide improved contrast in color and color hues between the electrically activated and de-activated state of the liquid crystalline material.

BACKGROUND OF THE INVENTION

Electro-optical displays useful for utilizing the light transmission characteristics and nematic liquid crystalline materials are generally provided by hermetically sealing a several micron to about 100 micron thick layer of the nematic liquid crystalline material between a pair of plates of which at least one of the plates is transparent and which have transparent electrically conductive coatings in the form of discrete images on their inner facing surfaces adjacent the liquid crystalline material. Means provided for attaching the conductive coating of one of the plates to a source of controlled electrical power and for transmitting a portion of the power across to the opposite conductive coating to provide a potential gradient across the liquid crystal layer that is able to rotate the liquid crystalline molecule when electrical power is applied.

It is also known that nematic liquid crystalline materials having positive dielectric anistrophy are provided by liquid crystal molecules having high polarity such as provided for example by appending a cyano group at the extreme end of one of the phenyl groups along the long molecular axis of a biphenyl type liquid crystal molecule. In addition, it is common practice to deposit an organic surfactant material such as polyvinyl alcohol over the conductive coatings on the facing surfaces of the display plates that can be rubbed to provide sufficient homogeneous (parallel) alignment of a nematic liquid crystal having positive dielectric anistrophy.

In contrast, nematic liquid crystalline materials having negative dielectric anistrophy are materials that change from homeotropic alignment in the unenergized state to homogeneous (parallel) alignment in the electrically energized state. Generally, it has been the practice to use nematic liquid crystalline materials having positive dielectric anistrophy or blends of nematic liquid crystalline materials having both negative and positive dielectric anistrophy with sufficient amount of material having positive dielectric anistrophy to cause the blend to behave as having positive dielectric anistrophy.

Although it has been the practice in the past to add selected organic dyes separately or in conjunction with dichroic dyes for colouring nematic liquid crystalline materials, such dyes in the absence of a dichroic dye have been unable to provide an effective contrast in colour that might otherwise occur when the nematic liquid cystalline molecules are rotated in the presence of an electrical field as previously described.

It is believed that the improved contrast is provided by the fact that long axis of the dichroic dye molecule tends to align with the long axis of the nematic liquid crystal molecule and is caused to rotate with the liquid crystal molecules when an electrical potential gradient is imposed across the liquid crystalline material. Since most dichroic dyes have been found to absorb a greater amount of light when incident light's electric vector is directed along their long molecular axis that when it is directed along their short molecular axis, a greater contrast is provided in the appearance of the liquid crystalline material when its long molecules are rotated in a direction parallel to the incident light.

An early example of thermometric liquid crystalline compositions that are able to change colors at different temperatures by using soluble diazo, indulene and nigrosine dyes is disclosed in United States Patent 3,576,761. Although such compositions may be suitable for the purpose intended, they are generally unable to provide effective colour contrast and variations in hue.

United States Patent 3,960,750 discloses a more recent example of the use of two particular pleochroic dyes with at least one other type of a dye of different hue in a liquid crystal having positive dielectric anistrophy provided by a mixture of liquid crystals having both positive and negative dielectric anistrophy. Although the two pleochroic dyes disclosed are proported to provide good color-to-color contrast by the previously described phenomenon of light absorption differences between their long and short molecular axis, they are not themselves optically active liquid crystalline materials and thus are unable to provide improved colour contrast and hue variations.

Another example of a pair of pleochroic dyes proported to be useful in improving color contrast in nematic liquid crystalline materials is disclosed in United States Patent 3,960,751. But here also, the dyes are not imparted with both liquid crystalline characteristics and dichroic characteristics and thus are unable to achieve a high order of contrast and hue variation.

An example of an optically active diazo compound having branched carbon chains appended to the phenyl groups is disclosed in United States Patent 3,977,769. Although such compounds are proported to be useful in adjusting the threshold voltage level of liquid crystalline materials, they are not

imparted with both the optically active liquid crystalline and dichroic characteristics and generally would not provide high order of color contrast and hue variation. An example of the use of azo type and/or azoxy type compounds for broadening the nematic operating temperature range of nematic liquid crystalline materials is disclosed in United States Patent 3,989,639. Generally, the broadening is provided by halide groups appended to one of the phenyl groups and none of the compounds disclosed provide a high order of color contrast and hue variation.

## SUMMARY OF THE INVENTION

Accordingly, it is an object of this invention to provide a nematic liquid crystalline composition that has a high order of color-to-color contrast and hue variation between the electrically activated and de-activated states of the composition.

It is another object to this invention to provide a nematic liquid crystalline composition having improved color-to-color contrast provided by a new family of optically active dichroic dye components that are imparted with both liquid crystalline and dichroic characteristics.

It is yet a further object of this invention to provide a nematic liquid crystalline composition having improved color-to-color contrast and hue variation between the electrically activated and de-activated states of the composition by the incorporation of one or more of the members of a new family of optically active dichroic dye components that are imparted with both liquid crystalline and dichroic characteristics either alone or in conjunction with one or more other types of organic dyes.

It is another object of this invention to provide a liquid crystal display utilizing a nematic liquid crystalline composition provided with improved color-to-color contrast and hue variation by the incorporation of a new family of optically active dichroic dye components that are imparted with both liquid crystal and dichroic characteristics either alone or in conjunction with other types of organic dyes.

## DETAILED DESCRIPTION OF THE INVENTION

The above objects and others have been achieved by providing a new family of dichroic dyes represented by the formulas:

I.

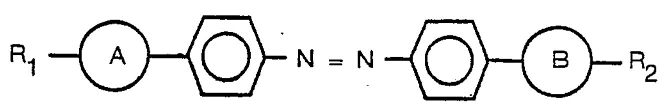

and

II.

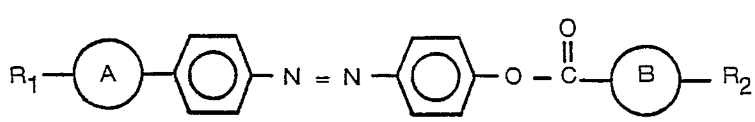

Where for Formula I:

—Ⓑ—$R_2$ is an ester of the formula

$$C_nH_{2n+1}-\overset{O}{\overset{\|}{C}}-O- \quad \text{or} \quad C_nH_{2n+1}-O-\overset{O}{\overset{\|}{C}}-$$

or a ketone of the formula

$$C_nH_{2n+1}-\overset{O}{\overset{\|}{C}}-$$

where n is an integer from 1 through 22;

and where for both Formulas I and II:

$R_1$—Ⓐ— is a substituted phenyl of the formula

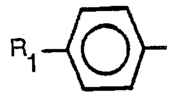

or is a biphenyl of the formula

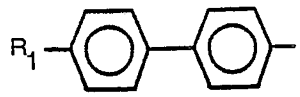

or is a disubstituted cyclohexane of the formula

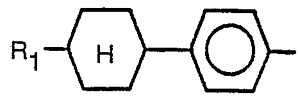

or is a bicyclo (2,2,2) octane ring of the formula

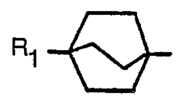

or is an ester of the formula

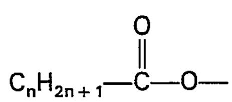 or 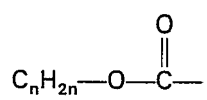

where n is an integer from 1 through 22 or is a hydrogen group wherein $R_1$ is a cyano group or an alkyl of the formula

$$—C_nH_{2n+1}$$

or an alkoxy of the formula

$$C_nH_{2n+1}—O—$$

or is an ester of the formula

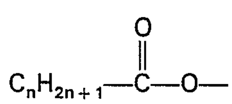 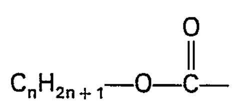

or a ketone of the formula

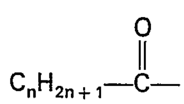

where n is an integer from 1 through 22, and where for formula II

—Ⓑ—$R_2$ is a phenyl of the formula

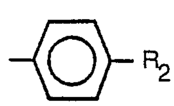

or is a substituted cyclohexane of the formula

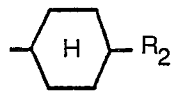

or is a bicyclo (2,2,2) octane ring of the formula

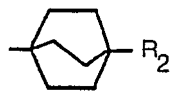

or is a substituted cyclohexane of the formula

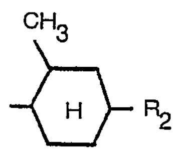

or is a biphenyl of the formula

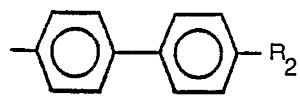

or is a substituted biphenyl of the formula

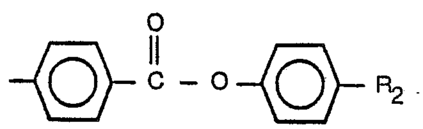

or is a phenyl-cyclohexane derivative of the formula

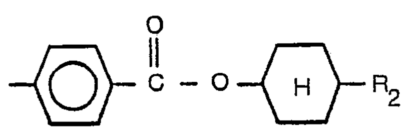

or is an alkyl of the formula

$$—C_nH_{2n+1}$$

where n is an integer from 1 through 22
where $R_2$ is a cyano group or an alkyl or the formula

$$—C_nH_{2n+1}$$

or an alkoxy of the formula

$$C_nH_{2n+1}—O—$$

or is an ester of the formula

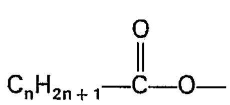 or 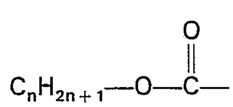

or a ketone of the formula

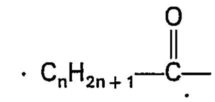

where n is an integer from 1 through 22.

Preferred subgroups of the above described family of optically active dichroic dyes are provided where $R_1$—Ⓐ— is an hydrogen group and $R_2$—Ⓑ— is a substituted phenyl or cyclohexane ring or alkyl group as respectively illustrated in following formulas III, IV and V:

III.

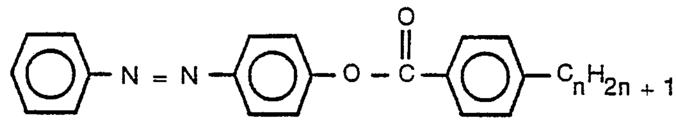

IV.

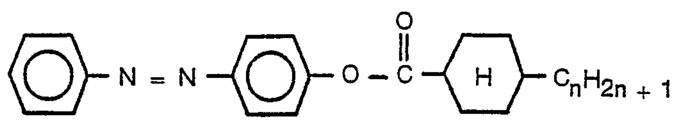

V.

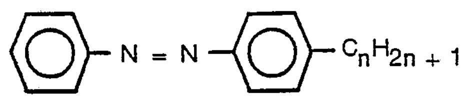

where n is an integer from 1 through 22.

Particularly preferred embodiments of the optically active dichroic dyes are shown in following formulas VI through X:

VI

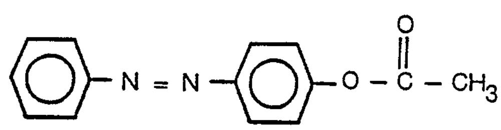

VII

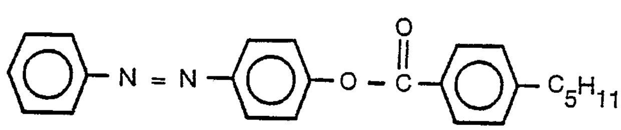

VIII

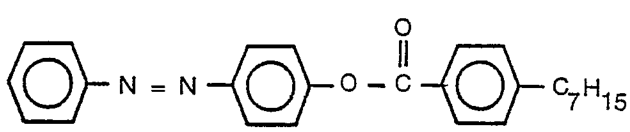

IX

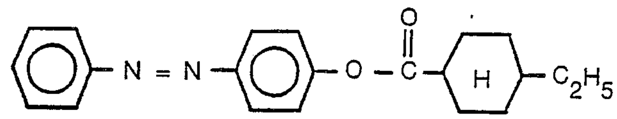

X

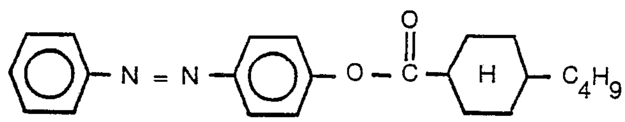

Following Table I illustrates the nematic and isotropic temperature characteristics determined for Formulas VI through X.

TABLE I

| Formula | Temperature at which nematic (°C) | Temperature at which isotropic (°C) |
|---|---|---|
| VI | — | 84° |
| VII | 100° | 114.9° |
| VIII | 103° | 113.4° |
| IX | 103° | 113.7° |
| X | 95.5°—96.7° | 145.6° |

Generally, the optically active dichroic dye components represented by formulas VI through X have a yellowish orange color and, as previously described, other types of suitably selected organic dyes can be added to the compositions of the invention to impart the various colour contrast and hue variations desired for a particular application. For instance the composition may have an effective amount of coloring matter included therein that is soluble in said composition. The colouring matter may then comprise at least one organic dye selected from the class consisting of azo, diazo, anthraquinone, azine, indulene, xanthene and nigrosine dyes and mixtures thereof.

The dichroic dye components of formulas VI through X do not have polar groups appended to either of the phenyl groups and thus exhibit negative dielectric anistrophy.

Although it has been common practice in the past to use polarizer plates on either one or both of the outer surfaces of the previously described plates between which nematic liquid crystalline materials are contained, it has been found that because of the highly effective light absorption characteristics of the dichroic dyes of the invention, polarizer plates are not required in many instances.

It has also been found that the dichroic dye components of the invention exhibit excellent light stability and in many instances are able to raise the isotropic temperature of the liquid crystalline materials to which they are added.

An example of one method of making a typical dichroic dye component of the invention is where a gasoline colorant commercially available from Aldridge Chemical Company having the formula:

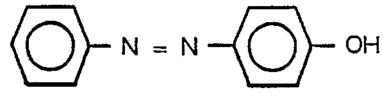

is reacted with:

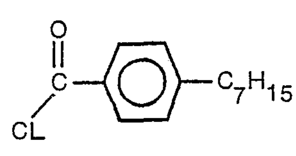

to provide:

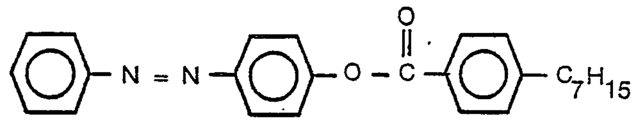

The dichroic dye components of the invention are able to be mixed amongst themselves and with other types of organic dyes or previously described. For instance, the dichroic dye may comprise a mixture of at least two components having the formula

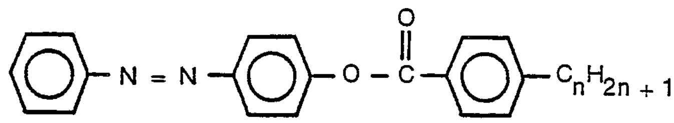

where n is an integer from 1 through 22 and the integer is different for each of the two components.

Often is also advantageous to add an optically active twisting agent to formulations imparting the dichroic dye components of the invention, such as biphenyls sold by Merck Chemical Company under the respective trademarks C15 (4-cyano-4′-(2-methyl-butoxy)-biphenyl) and CB—15(4-cyano-4-(2-methyl-butoxy)biphenyl) and CB—15 (4-cyano-4-(2-methyl-isobutyl)-biphenyl).

A typical mixture for providing a white image on a dark background when the liquid crystalline material is electrically energized in a transmission type optical display where both plates are transparent and a single polarizer is used on the back plate such that it is 90° out of phase with the rubbing direction on the back plate is to add the following components by percent weight to the total weight of a typical host nematic liquid crystalline material, such as that sold by Merck Chemical Company under the Trademark E-7 (eutectic mixture of 4-cyano-4′-alkyl and -alkoxy-biphenyls with 4-cyano-4″-n-pentyl-para-terphenyl).

| Component | % (by Weight) |
|---|---|
| Formula X | 5 |
| Formula VIII | 5 |
| Blue organic dye such as sold under the trademark PDH-13-D16 (1-hydroxy-4-(4′-monoxyanilino)-anthraquinone) by Merck Chemical Company | 1.7 |
| Suitable Red organic dye | .3 |
| Merck C-15 Twisting agent | .1 |

An example of a formulation for use in providing a white image on a dark background in a reflective type optical display that has a white reflector on the inside of the back plate and does not require polarizers is where, to a typical nematic liquid crystalline material having positive dielectric anistrophy, the following components are added in the indicated percentages by weight to the total weight of the liquid crystalline material:

| Component | % (by Weight) |
|---|---|
| Formula X | 5 |
| Formula VIII | 5 |
| Suitable blue organic dye | .6 |
| Suitable red organic dye | .2 |
| Merck C-15 Twisting Agent | 4—50 |

An example of providing a transmissive type optical display device with a dark image on a light background when the liquid crystalline material is electrically energized and there is no rubbing lines on the inner surface of the plates is to add to a nematic liquid crystalline material having negative dielectric anistrophy the following components in the indicated percentages by weight to the total weight of the liquid crystalline material:

| Component | % (by Weight) |
|---|---|
| Formula X | 5 |
| Formula VIII | 5 |
| Suitable blue organic dye | .6 |
| Suitable red organic dye | .2 |

Nematic liquid crystalline compositions of the invention that incorporate one or more of the members of the optically active dichroic dye components of the invention are able to provide both transmissive and reflective type electro optical displays having improved color-to-color contrast and hue variation and are readily adaptable to combine with one or more other types of suitable organic dye colorants and twisting agents when desired to provide a broad spectrum of the hue variation and color-to-color contrast.

## Claims

1. A nematic liquid crystalline composition comprising a mixture of at least one nematic liquid crystalline material and at least one optically active dichroic dye component represented by the formula

I.

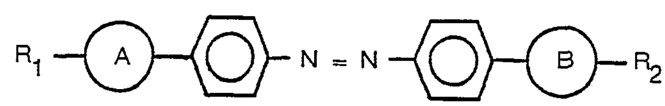

and

II.

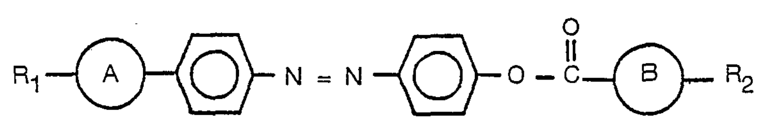

where for formula I:

—Ⓑ—$R_2$ is an ester of the formula

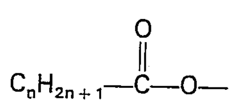 or 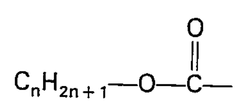

or a ketone of the formula

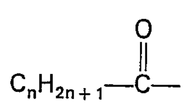

where n is an integer from 1 through 22; and where for both Formulas I and II:

$R_1$—Ⓐ— is a substituted phenyl of the formula

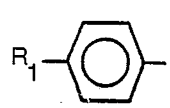

or is a biphenyl of the formula

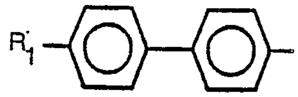

or is a disubstituted cyclohexane of the formula

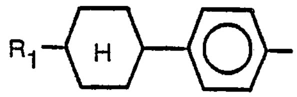

or is a bicyclo (2,2,2) octane ring of the formula

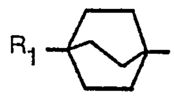

or is an ester of the formula:

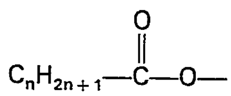 or 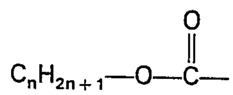

where n is an integer from 1 through 22 or is a hydrogen group wherein $R_1$ is a cyano group or an alkyl of the formula

$$—C_nH_{2n+1}$$

or an alkoxy of the formula

$$C_nH_{2n+1}—O—$$

or is an ester of the formula

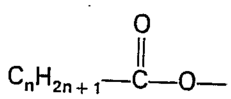 or 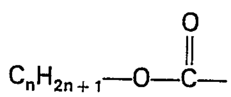

or a ketone of the formula

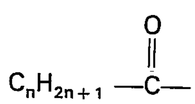

where n is an integer from 1 through 22 and where for formula II —Ⓑ—$R_2$ is a phenyl of the formula

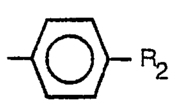

or is a substituted cylcohexane of the formula

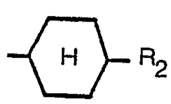

or is a bicyclo (2,2,2) octane ring of the formula

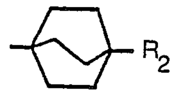

or is a biphenyl of the formula

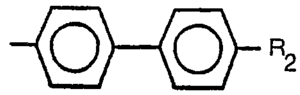

or is a substituted biphenyl of the formula

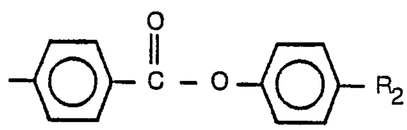

or is a substituted cyclohexane of the formula

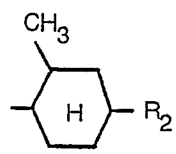

or is a phenyl-cyclohexane derivative of the formula

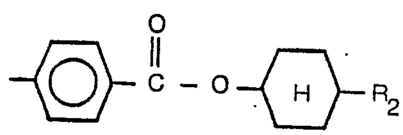

or is an alkyl of the formula

$$—C_nH_{2n+1}$$

where n is an integer of from 1 through 22

where $R_2$ is a cyano group or an alkyl of the formula

$$—C_nH_{2n+1}$$

or an alkoxy of the formula

$$C_nH_{2n+1}—O—$$

or is an ester of the formula

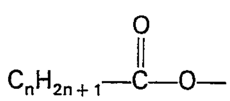 or 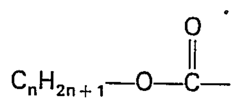

or is a ketone of the formula

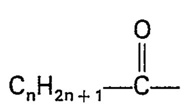

where n is an integer from 1 through 22.

2. The liquid crystalline composition of Claim 1 wherein the dichroic dye component has the formula

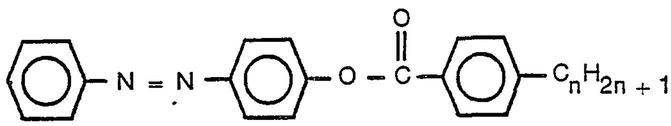

where n is an integer from 1 through 22.

3. The liquid crystalline composition of Claim 1 wherein the dichroic dye component has the formula

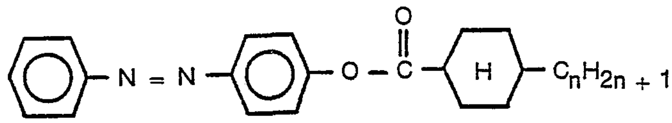

where n is an integer of 1 through 22.

4. The liquid crystalline composition of Claim 1 wherein the dichroic dye component has the formula

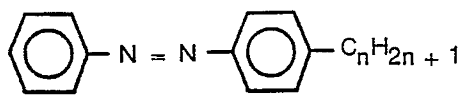

where n is an integer from 1 through 22.

5. The liquid crystalline composition of Claim 1 wherein the dichroic dye component comprises a mixture of at least one component having the formula

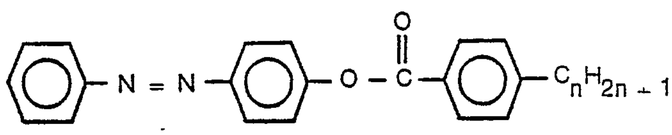

with at least one other component having the formula

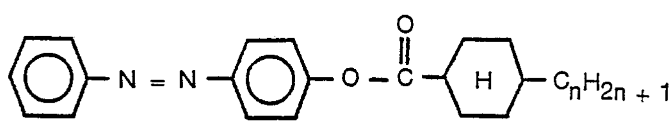

where n is an integer from 1 through 22.

6. The liquid crystalline composition of Claim 1 wherein the dichroic dye component comprises a mixture of at least two components having the formula

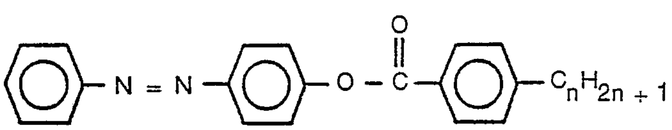

where n is an integer from 1 through 22 and the integer is different for each of the two components.

7. The liquid crystalline composition of Claims 1, 2, 3, 4, 5 or 6 having an effective amount of at least one twisting agent included therein.

8. The liquid crystalline composition of Claim 7 wherein the twisting agent is an optically active biphenyl type twisting agent.

9. The liquid crystalline composition of Claims 1, 2, 3, 4, 5 or 6 having an effective amount of coloring matter included therein that is soluble in said composition.

10. The liquid crystalline composition of Claim 9 wherein the colouring matter comprises at least one organic dye selected from the class consisting of azo, diazo, anthraquinone, azine, indulene, xanthene and nigrosine dyes and mixtures thereof.

11. A liquid crystal display device incorporating the liquid crystalline composition of Claim 1.

**Patentansprüche**

1. Nematische Flüssigkristall-Zusammensetzung, die umfaßt eine Mischung aus mindestens einem nematischen Flüsigkristallmaterial und mindestens einer optisch aktiven dichroitischen Farbstoffkomponente, dargestellt durch die Formel

I.

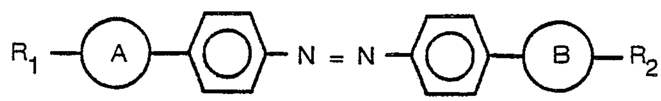 und

II.

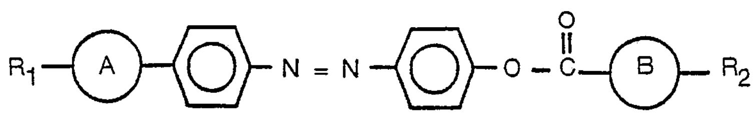

wobei in der Formel I bedeuten:

—Ⓑ—$R_2$ ein Ester der Formel

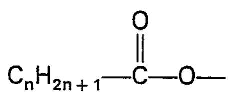 oder 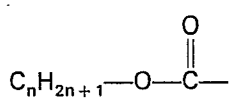

oder ein Keton der Formel

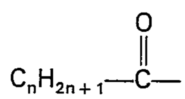

worin n eine ganze Zahl von 1 bis 22 darstellt; und
wobei in beiden Formeln I und II bedeuten:

$R_1$—Ⓐ— ein substituiertes Phenyl der Formel

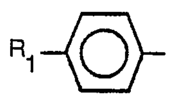

oder ein Biphenyl der Formel

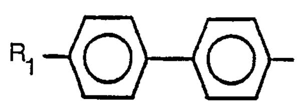

oder ein disubstituiertes Cyclohexan der Formel

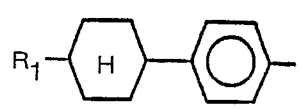

oder ein Bicyclo[2.2.2.]octan-Ring der Formel

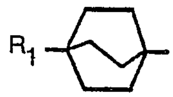

oder einen Ester der Formel

$$C_nH_{2n+1}-\overset{O}{\overset{\|}{C}}-O- \quad \text{oder} \quad C_nH_{2n+1}-O-\overset{O}{\overset{\|}{C}}-$$

worin n eine ganze Zahl von 1 bis 22 darstellt, oder eine Wasserstoffgruppe, worin $R_1$ darstellt eine Cyanogruppe oder ein Alkyl der Formel

$$-C_nH_{2n+1}$$

oder ein Alkoxy der Formel

$$C_nH_{2n+1}-O-$$

oder einen Ester der Formel

$$C_nH_{2n+1}-\overset{O}{\overset{\|}{C}}-O- \quad \text{oder} \quad C_nH_{2n+1}-O-\overset{O}{\overset{\|}{C}}-$$

oder ein Keton der Formel

$$C_nH_{2n+1}-\overset{O}{\overset{\|}{C}}-$$

worin n eine ganze Zahl von 1 bis 22 darstellt, und wobei in der Formel II bedeuten:

—Ⓑ—$R_2$ ein Phenyl der Formel

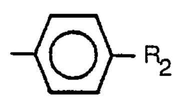

oder ein substituiertes Cyclohexan der Formel

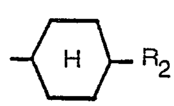

oder einen Bicyclo[2.2.2]octan-Ring der Formel

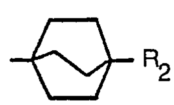

oder ein Biphenyl der Formel

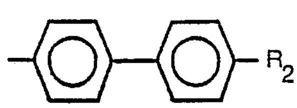

oder ein substituiertes Biphenyl der Formel

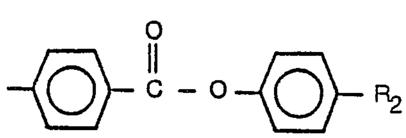

oder ein substituiertes Cylcohexan der Formel

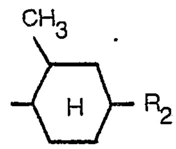

oder ein Phenylcyclohexan-Derivat der Formel

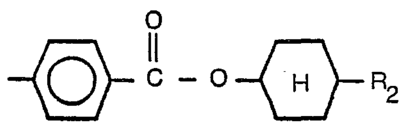

oder ein Alkyl der Formel

$$—C_nH_{2n+1}$$

worin n eine ganze Zahl von 1 bis 22 darstellt, worin $R_2$ darstellt eine Cyanogruppe oder ein Alkyl der Formel

$$—C_nH_{2n+1}$$

oder ein Alkoxy der Formel

$$C_nH_{2n+1}—O—$$

oder einen Ester der Formel

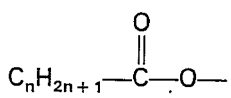
oder
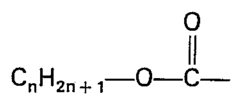

oder ein Keton der Formel

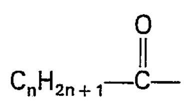

worin n eine ganze Zahl von 1 bis 22 darstellt.

2. Flüssigkristallzusammensetzung nach Anspruch 1, worin die dichroitische Farbstoffkomponente die Formel hat

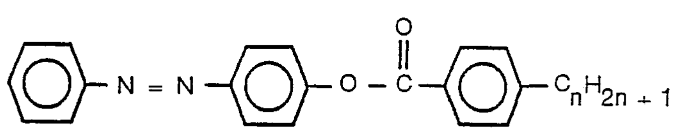

worin n eine ganze Zahl von 1 bis 22 darstellt.

3. Flüssigkristallzusammensetzung nach Anspruch 1, worin die dichroitische Farbstoffkomponente die Formel hat

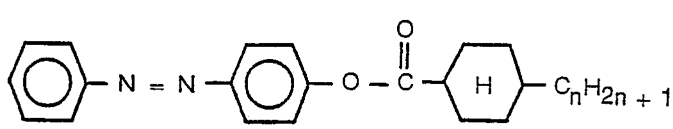

worin n eine ganze Zahl von 1 bis 22 darstellt.

4. Flüssigkristallzusammensetzung nach Anspruch 1, worin die dichroitische Farbstoffkomponente die Formel hat

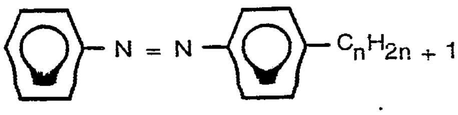

worin n eine ganze Zahl von 1 bis 22 darstellt.

5. Flüssigkristallzusammensetzung nach Anspruch 1, worin die dichroitische Farbstoffkomponente umfaßt eine Mischung aus mindestens eine Komponente der Formel

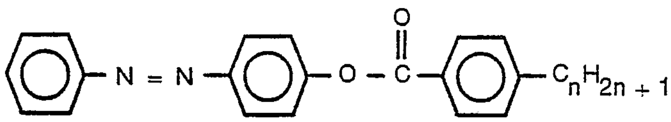

und mindestens einer anderen Komponente der Formel

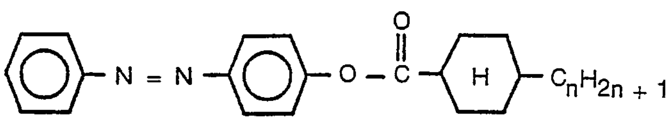

worin n eine ganze Zahl von 1 bis 22 darstellt.

6. Flüssigkristallzusammensetzung nach Anspruch 1, worin die dichroitische Farbstoffkomponente umfaßt eine Mischung aus mindestens zwei Komponenten der Formel

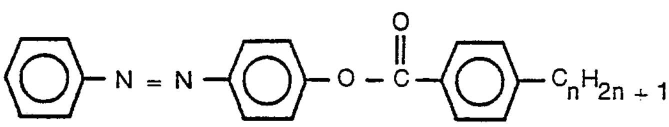

worin n eine ganze Zahl von 1 bis 22 darstellt und die ganze Zahl für jede der beiden Komponenten verschieden ist.

7. Flüssigkristallzusammensetzung nach den Ansprüchen 1 bis 6, die eine wirksame Menge mindestens eines Twistingmittels darin eingeschlossen enthält.

8. Flüssigkristallzusammensetzung nach Anspruch 7, worin das Twistingmittel ein optisch aktives Twistingmittel vom Biphenyl-Typ ist.

9. Flüssigkristallzusammensetzung nach den Ansprüchen 1 bis 6, die eine wirksame Menge eines färbenden Materials eingeschlossen enthält, das in der Zusammensetzung löslich ist.

10. Flüssigkristallzusammensetzung nach Anspruch 9, worin das färbende Material umfaßt mindestens einen organischen Farbstoff, ausgewählt aus der Klasse, die besteht aus Azo-, Diazo-, Anthrachinon-, Azin-, Indolen-, Xanthen- und Nigrosinffarbstoffen und Mischungen davon.

11. Flüssigkristall-Anzeigevorrichtung mit eingearbeiteter Flüssigkristallzusammensetzung gemäß Anspruch 1.

**Revendications**

1. Une composition à base de cristaux liquides nématiques comprenant un mélange d'au moins une matière de type cristal liquide nématique et au moins un colorant dichroïque optiquement actif représenté par la formule

I.

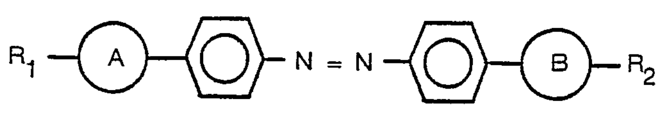

et

II.

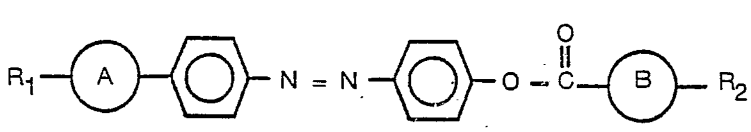

où, pour la formule I:

—Ⓑ—$R_2$ est un ester de formule

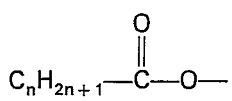 ou 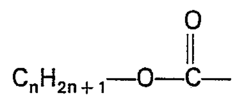

ou une cétone de formule

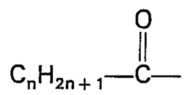

où n est un entier de 1 à 22; et ou pour les deux formules I et II:

$R_1$—Ⓐ— est un phényle substitué de formule

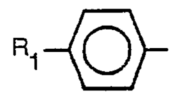

ou est un biphényle de formule

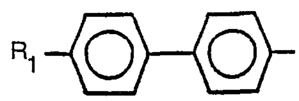

ou est un cyclohexane disubstitué de formule

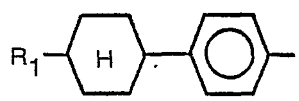

ou est un cycle bicyclo[2.2.2]octane de formule

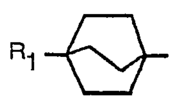

ou est un ester de formule

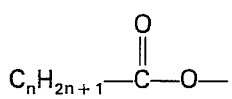 ou 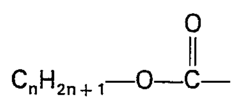

où n est un entier de 1 à 22 ou est un atome d'hydrogène où $R_1$ est un groupe cyano ou un alkyle de formule

$$—C_nH_{2n+1}$$

ou un alcoxy de formule

$$C_nH_{2n+1}—O—$$

ou est un ester de formule

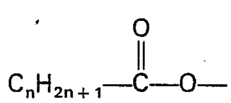 ou 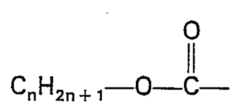

ou une cétone de formule

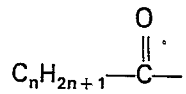

où n est un entier de 1 à 22 et où, pour la formule II

—Ⓑ—$R_2$ est un phényle de formule

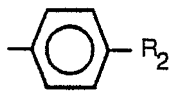

ou est un cylcohexane substitué de formule

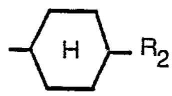

ou est un cycle bicyclo[2.2.2]octane de formule

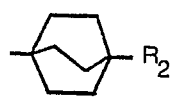

ou est un biphényle de formule

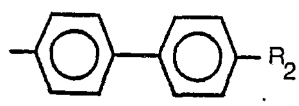

ou est un biphényle substitué de formule

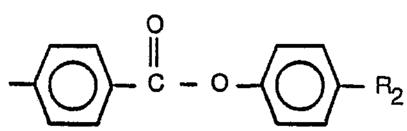

ou est un cyclohexane substitué de formule

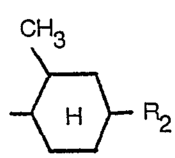

ou est un dérivé de phényl-cyclohexane de formule

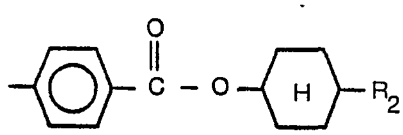

ou est un alkyle de formule

$$-C_nH_{2n+1}$$

où n est un entier de 1 à 22 où $R_2$ est un groupe cyano ou un alkyle de formule

$—C_nH_{2n+1}$

ou un alcoxy de formule

$C_nH_{2n+1}—O—$

ou est un ester de formule

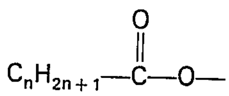 ou 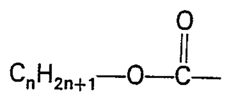

ou est une cétone de formule

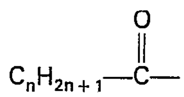

où n est un entier de 1 à 22.

2. La composition à base de cristaux liquides de la revendication 1, dans laquelle le colorant dichroïque a pour formule

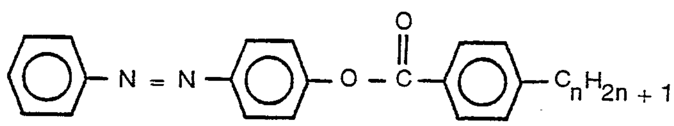

où n est un entier de 1 à 22.

3. La composition à base de cristaux liquides de la revendication 1, dans la quelle le colorant dichroïque a pour formule

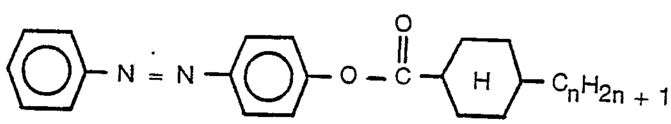

où n est un entier de 1 à 22.

4. La composition à base de cristaux liquids de la revendication, dans laquelle le colorant dichroïque a pour formule

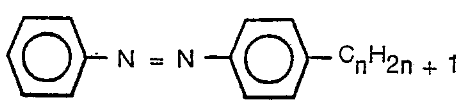

où n est un entier de 1 à 22.

5. La composition à base de cristaux liquids de la revendication 1, dans laquelle de colorant dichroïque comprend un mélange d'au moins un composant ayant pour formule

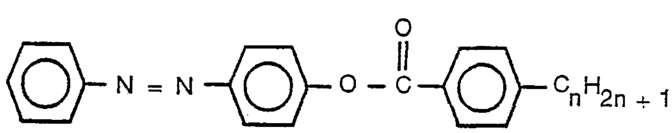

et d'au moins un autre composant ayant pour formule

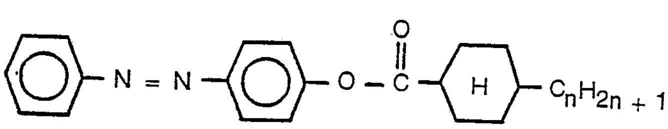

où n est un entier de 1 à 22.

6. La composition à base de cristaux liquids de la revendication 1, dans laquelle le colorant dichroïque comprend un mélange d'au moins deux composants ayant pour formule

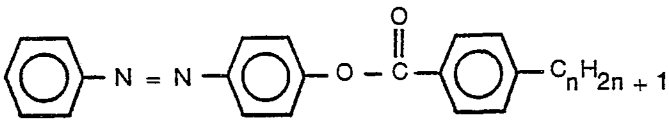

où n est un entier de 1 à 22 et l'entier est différent pour chacun des deux composants.

7. La composition à base de cristaux liquides des revendications 1, 2, 3, 4, 5 ou 6, contenant une quantité efficace d'au moins un agent d'arrangement en hélice.

8. La composition à base de cristaux liquides de la revendication 7, dans laquelle l'agent d'arrangement en hélice est un agent d'arrangement en hélice de type biphényle optiquement actif.

9. La composition à base de cristaux liquides des revendications 1, 2, 3, 4, 5 ou 6, contenant une quantité efficace de matière colorante qui est soluble dans ladite composition.

10. La composition à base de cristaux liquides de la revendication 9, dans laquelle le matière colorante comprend au moins un colorant organique choisi parmi la catégorie constituée par les colorants azoïques, diazoïques, d'anthraquinone, d'azine, d'indulène, de xanthène et de nigrosine et leurs mélanges.

11. Un dispositif d'affichage à cristaux liquides comprenant la composition à base de cristaux liquides de la revendication 1.